# EUROPEAN PATENT SPECIFICATION

(11) **EP 3 855 041 B1**
(45) Date of publication and mention of the grant of the patent: **16.11.2022**
(21) Application number: 20153050.8
(22) Date of filing: 22.01.2020
(51) Int. Cl.: F16D 65/10, F16D 65/78

(54) **A DRUM FOR A MOTOR-VEHICLE WHEEL BRAKE**
TROMMEL FÜR EINE KRAFTFAHRZEUGRADBREMSE
TAMBOUR DE FREIN DE ROUE DE VÉHICULE À MOTEUR

(43) Date of publication of application: 28.07.2021
(73) Proprietor: FCA Italy S.p.A., 10135 Torino (IT)
(72) Inventor: BADINO, Renato, 10135 Torino (IT); FIDUCIA, Pier Salvo, 10135 Torino (IT); PARODI, Matteo, 10135 Torino (IT); LUCÀ, Stefano, 10135 Torino (IT)
(74) Representative: Notaro, Gianluca

(56) References cited:
- EP-A1- 3 181 936
- FR-A1- 2 830 914
- US-A- 2 889 173

## Description

### Field of the invention

The present invention relates to a drum of a brake drum of a motor-vehicle wheel comprising:
- a side cylindrical wall and an annular front wall, perpendicular to a rotation axis of the drum brake,
- said side cylindrical wall having a plurality of peripheral aerodynamic fins, distributed with a constant pitch along said side cylindrical wall,
- said front annular wall having a main face on which a series of main aerodynamic fins are formed, distributed around said rotation axis and arranged protruding from said main face.

### Prior art

During a particularly severe operating condition, the braking assembly of a motor-vehicle drum brake can reach significant temperatures that can lead to operating anomalies, such as, for example, a decrease of the braking force or even a deformation of the drum itself. A device of the type indicated at the beginning of this description, aimed at reducing the undesirable effects related to high temperatures, is illustrated in the documents EP 2 326 854 B1 and EP 3 181 936 A1. However, the solutions described in these documents are not fully satisfactory from various points of view, in particular in terms of construction simplicity and in terms of the effectiveness of cooling the drum during operation. Consequently, the present invention aims to overcome these drawbacks and proposes an alternative solution to that illustrated in the document indicated above.

### Object of the invention

It is therefore an object of the invention to provide a drum for a drum brake of a motor-vehicle wheel which is simple in construction, functional and of low-cost.

Another object of the invention is to provide a drum for a drum brake of a motor-vehicle wheel that can be implemented indifferently either on a right wheel or on a left wheel of a motor-vehicle, without affecting the advantageous effects during operation, deriving from the characteristics which are the basis of the invention.

Another object is to provide a drum for a drum brake of a motor-vehicle wheel that allows reduction - compared to known solutions - of the heat transfer by conduction to the disc arranged for coupling with a wheel hub.

### Summary of the invention

In view of achieving the aforesaid objects, the present invention relates to a drum of a brake drum of a motor-vehicle wheel, having all the characteristics indicated at the beginning of the present description and further characterized in that said main aerodynamic fins are alternately inclined in directions opposite to a radial direction.

Preferably, the aerodynamic fins are formed in a single piece with the walls of the drum.

Preferably, the main aerodynamic fins are tapered towards an inner portion of the front annular wall.

Still according to a preferred characteristic of the invention, the main aerodynamic fins are distributed with constant pitch along the main face of the drum.

Thanks to the aforesaid characteristics and additional characteristics indicated in the attached claims and in the following description, the drum according to the present invention achieves the predetermined objects.

### Description of a preferred embodiment

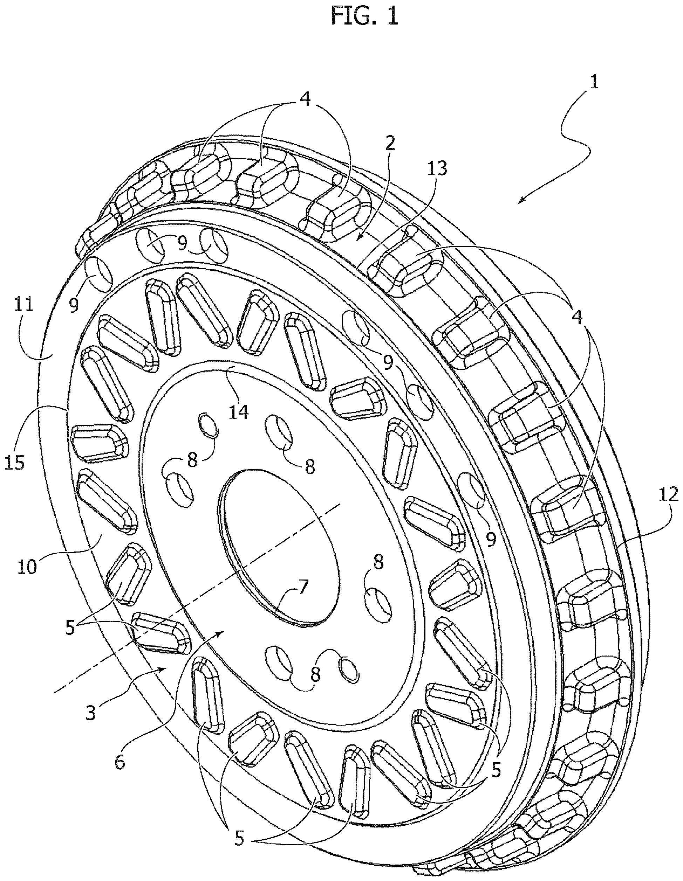

Further characteristics and advantages of the invention will become apparent from the following description with reference to the attached drawings, provided purely by way of non-limiting example, wherein Figure 1 is a perspective view of a preferred embodiment of the invention.

In the following description, various specific details are illustrated aimed at a thorough understanding of examples of one or more embodiments. The embodiments can be implemented without one or more of the specific details, or with other methods, components, materials, etc. In other cases, known structures, materials, or operations are not shown or described in detail to avoid obscuring various aspects of the embodiments.

The references illustrated here are only for convenience and do not therefore delimit the field of protection or the scope of the embodiments.

In Figure 1, reference 1 indicates overall a preferred embodiment of a drum of a brake drum of a motor-vehicle wheel, according to the invention.

The drum 1 comprises a side cylindrical wall 2 and a front annular wall 3, perpendicular to the rotation axis of the drum brake. According to the known prior art, the drum is associated with members arranged to exert a braking action on the front annular wall 3. Additional constructive details relative to these members commonly known as brake shoes and to the hydraulic cylinders are not presented here, since these details can be implemented in any known way and also because removal of these details from the drawings makes them more readily and easily understood.

It is known that the braking assembly of a motor-vehicle drum brake can reach significant temperatures during operation, which can lead to operating anomalies, such as, for example, a decrease in the braking force or even a deformation of the drum itself.

According to a first characteristic of the invention, the side cylindrical wall 2 includes a plurality of peripheral aerodynamic fins 4, distributed with constant pitch along the side cylindrical wall 2. According to the preferred embodiment illustrated in Figure 1, the peripheral aerodynamic fins 4 have a quadrangular prismatic shape. In order to effectively cool the drum during an operating condition, the peripheral fins 4 are configured to convey an air flow and increase the heat exchange surfaces, so as to dissipate the heat developed during braking. The peripheral fins 4, in addition to contributing to heat dissipation, also help to stiffen the drum 1 at the side cylindrical wall 2.

According to the known prior art, the front annular wall 3 surrounds a central disc 6 with an opening 7, arranged for coupling with a wheel hub (not shown). The disc 6 includes a plurality of holes 8 arranged for coupling with respective engagement members for assembly with the wheel hub.

As illustrated in the perspective view of Figure 1, according to an essential characteristic of the invention, the front annular wall 3 has a main face 10, on which a series of main aerodynamic fins 5 are formed. The main aerodynamic fins 5 are distributed around the rotation axis of the drum 1 and are arranged protruding from the main face 10. This protruding conformation of the main fins 5 can be obtained following a casting process, through which the front annular wall 3 is melted and produced in the required shape.

The main aerodynamic fins 5 extend substantially from a circular outer edge 14 of the disc 6 to an outer edge 15 of the main face 10. The peripheral fins 4 extend from a vertical edge 12 of the side cylindrical wall 2 to an inner edge 13 of the side cylindrical wall 2.

According to a further characteristic of the invention, the peripheral and main fins 4, 5 are formed in a single piece with the respective walls 2, 3 of the drum 1, which can be made, for example, of cast iron.

According to an essential characteristic of the present invention, the main aerodynamic fins 5 are alternately inclined in opposite directions with respect to a radial direction. Preferably, the main aerodynamic fins 5 are tapered towards the disc 6.

Thanks to the profile of the main aerodynamic fins 5, as indicated above, it is possible to obtain a series of important advantages. Firstly, the main aerodynamic fins 5 allow efficient conveyance of the surrounding air, to cool the drum 1 and the disc 6 during operation. Secondly, the inclination in opposite directions of the fins 5 allows the drum 1 according to the invention to be used both on a right wheel and on a left wheel of a motor-vehicle, without compromising the effectiveness of the cooling step. The main aerodynamic fins 5 protrude from the plane defined by the main face 10. Thanks to this characteristic, in addition to achieving the aerodynamic effect already indicated above, the fins 5 also function to obtain a structural stiffening of the drum 1.

Preferably, the thickness of the protruding fins 5 is greater than that of the front annular wall 3. The front wall 3 which carries the fins 5 can be made with an extremely limited thickness, since the necessary rigidity characteristics of the drum 1 are respected with the arrangement of the fins 5 protruding from the wall 3. Consequently, since the front annular wall 3 is made with a minimum thickness, the effect of heat transfer by conduction to the disc 6 is extremely reduced. This characteristic is particularly advantageous since an excessive overheating of the disc 6 may lead to malfunctions during operation, such as, for example, a deformation of the members connecting to the wheel hub.

In order to further lighten the drum or to rebalance the static and/or dynamic imbalance in rotation, preferably, the front annular wall 3 of the drum 1 includes, along a peripheral portion 11 thereof, a series of non-passing auxiliary perforations 9.

Thanks to the aforesaid characteristics, the drum according to the present invention achieves all the predetermined aims.

Of course, without prejudice to the principle of the invention, the details of construction and the embodiments may vary widely with respect to those described and illustrated purely by way of example, without departing from the scope of protection of the present invention, as defined by the attached claims.

## Claims

1. A drum (1) of a brake drum of a motor-vehicle wheel comprising:
- a side cylindrical wall (2) and an annular front wall (3), perpendicular to a rotation axis of the drum brake,
- said side cylindrical wall (2) having a plurality of peripheral aerodynamic fins (4), distributed with constant pitch along said side cylindrical wall (2),
- said front annular wall (3) having a main face (10) on which a series of main aerodynamic fins (5) are formed, distributed around said rotation axis, and arranged protruding from said main face (10).
- said drum (1) being **characterized in that** said main aerodynamic fins (5) are alternately inclined in opposite directions with respect to a radial direction.

2. A drum (1) according to claim 1, **characterized in that** the fins (4, 5) are formed in a single piece with the walls (2, 3) of the drum (1).

3. A drum (1) according to claim 1 or 2, **characterized in that** said main aerodynamic fins (5) are distributed with a constant pitch along said main face (10).

4. A drum (1) according to any one of the preceding claims, **characterized in that** said front annular wall (3) surrounds a central disc (6) arranged for coupling with a wheel hub.

5. A drum (1) according to claim 4, **characterized in that** said main aerodynamic fins (5) are tapered towards said disc (6).

6. A drum (1) according to any one of the preceding claims, **characterized in that** the front annular wall (3) includes, along a peripheral portion thereof (11), a series of non-passing auxiliary perforations (9) arranged to rebalance the static and/or dynamic imbalance in rotation of the drum.

## Patentansprüche

1. Trommel (1) einer Bremstrommel eines Kraftfahrzeugrads, umfassend:
- eine seitliche zylindrische Wand (2) und eine ringförmige vordere Wand (3), perpendikular zu einer Drehachse der Trommelbremse,
- wobei die seitliche zylindrische Wand (2) eine Vielzahl von aerodynamischen Umfangsrippen (4) aufweist, die mit einem konstanten Abstand entlang der seitlichen zylindrischen Wand (2) verteilt sind,
- wobei die vordere ringförmige Wand (3) eine Hauptseite (10) aufweist, auf der eine Reihe von aerodynamischen Rippen (5) ausgebildet sind, die um die Drehachse verteilt und von der Hauptseite (10) vorstehend angeordnet sind,
- wobei die Trommel (1) **dadurch gekennzeichnet ist, dass** die aerodynamischen Hauptrippen (5) abwechselnd in entgegengesetzte Richtungen zu einer radialen Richtung geneigt sind.

2. Trommel (1) nach Anspruch 1, **dadurch gekennzeichnet, dass** die Rippen (4, 5) einstückig mit den Wänden (2, 3) der Trommel (1) ausgebildet sind.

3. Trommel (1) nach Anspruch 1 oder 2, **dadurch gekennzeichnet, dass** die aerodynamischen Hauptrippen (5) mit einem konstanten Abstand entlang der Hauptseite (10) verteilt sind.

4. Trommel (1) nach einem der vorhergehenden Ansprüche, **dadurch gekennzeichnet, dass** die vordere ringförmige Wand (3) eine mittige Scheibe (6) umgibt, die zum Koppeln mit einer Radnabe eingerichtet ist.

5. Trommel (1) nach Anspruch 4, **dadurch gekennzeichnet, dass** sich die aerodynamischen Hauptrippen (5) zu der Scheibe (6) hin verjüngen.

6. Trommel (1) nach einem der vorhergehenden Ansprüche, **dadurch gekennzeichnet, dass** die vordere ringförmige Wand (3) entlang eines Umfangsbereichs (11) von ihr eine Reihe von nicht durchgehenden Hilfsperforationen (9) aufweist, die zum Ausgleichen der statischen und/oder dynamischen Unwucht bei der Drehung der Trommel eingerichtet sind.

## Revendications

1. Tambour (1) d'un tambour de frein d'une roue de véhicule automobile comprenant :
- une paroi cylindrique latérale (2) et une paroi avant annulaire (3), perpendiculaires à un axe de rotation du frein à tambour,
- ladite paroi cylindrique latérale (2) ayant une pluralité d'ailettes aérodynamiques périphériques (4), réparties à pas constant le long de ladite paroi cylindrique latérale (2),
- ladite paroi annulaire avant (3) ayant une face principale (10) sur laquelle est formée une série d'ailettes aérodynamiques principales (5), réparties autour dudit axe de rotation, et agencées en saillie de ladite face principale (10).
- ledit tambour (1) étant **caractérisé en ce que** lesdites ailettes aérodynamiques principales (5) sont inclinées de manière alternée dans des directions opposées par rapport à une direction radiale.

2. Tambour (1) selon la revendication 1, **caractérisé en ce que** les ailettes (4, 5) sont formées en une seule pièce avec les parois (2, 3) du tambour (1).

3. Tambour (1) selon la revendication 1 ou 2, **caractérisé en ce que** lesdites ailettes aérodynamiques principales (5) sont réparties à pas constant le long de ladite face principale (10).

4. Tambour (1) selon l'une quelconque des revendications précédentes, **caractérisé en ce que** ladite paroi annulaire avant (3) entoure un disque central (6) agencé pour se coupler à un moyeu de roue.

5. Tambour (1) selon la revendication 4, **caractérisé en ce que** lesdites ailettes aérodynamiques principales (5) sont effilées vers ledit disque (6).

6. Tambour (1) selon l'une quelconque des revendications précédentes, **caractérisé en ce que** la paroi annulaire avant (3) comprend, le long d'une partie périphérique de celle-ci (11), une série de perforations auxiliaires non passantes (9) agencées pour rééquilibrer le balourd statique et/ou dynamique de rotation du tambour.
